# EUROPEAN PATENT APPLICATION

(11) **EP 2 224 398 A1**
(43) Date of publication of application: **01.09.2010**
(21) Application number: 10250317.4
(22) Date of filing: 23.02.2010
(51) Int. Cl.: G06Q 30/00, G06Q 40/00

(54) **Bill payment management**

(30) Priority: 23.02.2009 US 154714 P; 27.04.2009 US 430379
(71) Applicant: Bank of America Corporation, Charlotte, NC 28255 (US)
(72) Inventor: Williams, Carrie Anne, Charlotte North Carolina 28255 (US); Tucker, Faith A., Charlotte North Carolina 28255 (US); Griffin, Maura L., Charlotte North Carolina 28255 (US)
(74) Representative: Kinsler, Maureen Catherine

(57) **Abstract**

Methods, systems, and/or computer program products for bill payment management includes determining a periodic payment amount for a customer based on at least one bill of the customer. The periodic payments are periodically charged to the customer by an entity and the entity pays the bill(s) from an account.

## Description

### CROSS REFERENCE TO RELATED APPLICATIONS

This application claims benefit of priority under 35 U.S.C. § 119(e) to the filing date of U.S. Provisional Application No. 61/154,714, as filed on February 23, 2009, which is incorporated herein by reference in its entirety.

### FIELD

Embodiments of the present invention relate to methods, apparatuses (systems), and computer program products for the management of bill payments of a consumer.

### BACKGROUND

Many consumers are uncomfortable with expenses that fluctuate significantly over the pay periods, such as bills required to be paid month to month that fluctuate significantly. Many consumers are also uncomfortable with the shock of many different bills being due at approximately the same time during each month, or other period. Consumers know that they should budget for these bills but are not motivated to do so. They want to meet their monthly obligations/bill payments but find the pain of developing a budget greater than the pain they receive for not doing so (the occasional late payment). Many households are living pay check to pay check. Consumers want to feel the accomplishment of living within a budget (without having to do the work) and be sure that they no longer experience the pain associated with late fees. The source oflate fees is often the volatility in bill payments per pay period. The sources of this volatility are (1) variance in amount of monthly bills month over month; (2) variance in due date of specific bills month over month (e.g due on the 16th in Jan but on the 12th in Feb and customer receives pay check on 15th of every month) and (3) non monthly bills (weekly, bimonthly, semi annual and annual).

Thus, there is a need for methods and apparatuses that help a consumer to manage their bills and bill payments to allow consumers to get the feeling of accomplishment of living within a budget without having to manage the budget.

### SUMMARY

In accordance with some embodiments of the present invention, methods, apparatuses (systems), and/or computer program products for bill payment management includes determining a series of substantially equal payment amounts to charge a customer via a computer system based on a plurality of recurring bills of the customer. The customer is periodically charged this substantially equal payment amount and at least one of the recurring bills is paid from an account on behalf of the customer.

In accordance with another embodiment of the present invention, a method for bill payment management periodically charges payment amounts to a customer via a computer system based on a plurality of recurring bills of the customer. At least one of the recurring bill from an account on behalf of the customer by an entity other than the customer

In accordance with another embodiment of the present invention, a method implemented by a computer system for bill payment management includes determining a plurality of periodic payments for the customer based upon the customer's recurring bills. At least one of these bills is paid on behalf of the customer.

In accordance with another embodiment of the present invention, an apparatus for bill payment management includes a processor and a module operable on the processor. The module is configured to determine a periodic payment amount for a customer based on at least one recurring bill of the customer. The module is also configured to periodically charge the customer the payment amount and pay at least one recurring bill from an account on behalf of the customer.

In accordance with another embodiment of the present invention, a computer program product for bill payment management includes a computer-readable medium having a computer program residing thereon. The computer program includes instructions for determining a periodic payment amount for a customer based on at least one recurring bill of the customer. The computer program further includes instructions for periodically charging the customer the payment amount and instructions for paying the at least one recurring bill from an account on behalf of the customer.

### BRIEF DESCRIPTION OF DRAWINGS

Figures 1A-B (collectively Figure 1) is a flow chart of a method for bill payment management in accordance with an embodiment of the present invention.
Figure 2 is a block schematic diagram of an example system for bill payment management in accordance with an embodiment of the present invention.
Figure 3 illustrates bar charts to show the leveling of bill payments using the bill payment management according to one embodiment of the present invention.

### DETAILED DESCRIPTION

Embodiments of the present invention are described below with reference to flowchart illustrations and/or block diagrams of methods, apparatus (systems), and computer program products. It will be understood that each block of the flowchart illustrations and/or block diagrams, and/or combinations of blocks in the flowchart illustrations and/or block diagrams, can be implemented by computer program instructions. These computer program instructions may be provided to a processor of a general purpose computer, special purpose computer, or other programmable data processing apparatus to produce a particular machine, such that the instructions, which execute via the processor of the computer or other programmable data processing apparatus, create means for implementing the functions/acts specified in the flowchart and/or block diagram block or blocks.

These computer program instructions may also be stored in a computer-readable memory that can direct a computer or other programmable data processing apparatus to function in a particular manner, such that the instructions stored in the computer readable memory produce an article of manufacture including instruction means which implement the function/act specified in the flowchart and/or block diagram block(s).

The computer program instructions may also be loaded onto a computer or other programmable data processing apparatus to cause a series of operational steps to be performed on the computer or other programmable apparatus to produce a computer-implemented process such that the instructions which execute on the computer or other programmable apparatus provide steps for implementing the functions/acts specified in the flowchart and/or block diagram block(s). Alternatively, computer program implemented steps or acts may be combined with operator or human implemented steps or acts in order to carry out an embodiments of the invention.

Embodiments of the present invention have been developed by determining that fluctuation of bill amounts and thus, payments required by a consumer, should be leveled out so that consumers can accurately predict expenditures per a recurring pay period. The pay period is a time period predefined by the customer and/or financial institution, such as daily, weekly, monthly, yearly, upon a 30 day increment, a cash-flow time period, or any other predefined pay period. During each pay period, funds may be transferred from a source account to a bill pay account. The source account may be source account where funds are transferred from the customer to the bill pay account. The amount of funds transferred is an equal amount each pay period. The bill pay account holds the funds transferred from the source account and is the source of funds for the actual periodic bill payments to a creditor. For each pay period (or other predefined period), the bills that come due in each bill period are paid by the financial institution to the creditor. The bill period is the frequency that any particular bill is due and payable.

The following detailed description refers to the accompanying drawings which illustrate specific embodiments of the invention. Other embodiments having different structures and operations do not depart from the scope of the present invention.

It should be understood that terms like "bank," "financial institution," and just "institution" are used herein in their broadest sense. The term "financial institution" is intended to encompass all such possibilities, including but not limited to, banks, finance companies, stock brokerages, credit unions, mortgage companies, finance companies, companies, organizations which issue bills to consumers, organizations which pay bills on behalf of consumers, third party entities acting on behalf of the any of the above, etc, Additionally, disclosed embodiments may suggest or illustrate the use of agencies or contractors external to the financial institution to perform some or all of the calculations and data repository services. These illustrations are examples only, and an institution or business can implement the entire invention on their own computer systems or even a single work station if appropriate databases are present and can be accessed.

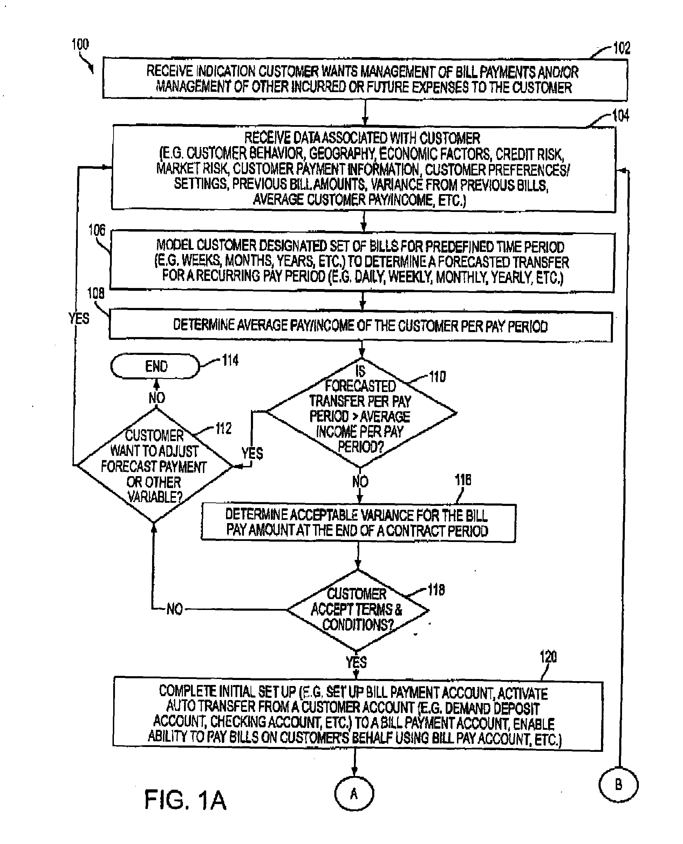

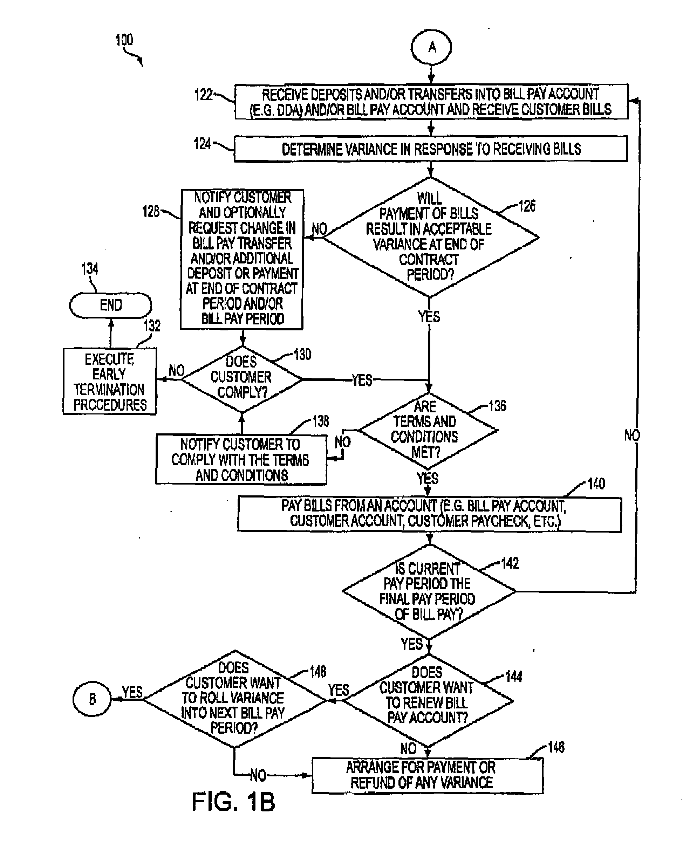

Figure 1 is a flow chart of an example of a method 100 for bill payment management in accordance with an embodiment of the present invention. The flow chart is divided into blocks illustrating actions or events that are undertaken by a financial institution, such as a bank, a third party, and/or a customer as described herein. This flow chart represents an exemplary embodiment of the invention. It will be understood that, unless clearly stated herein otherwise, in other embodiments of the invention the actions or events may be performed in a different order or simultaneously. Likewise, in some embodiments of the invention, one or more of the actions or events may be removed, optional, added, and/or combined with one or more other actions or events.

In block 102, a financial institution receives an indication that the customer would like management of the customer's bill payments or management of any other expense incurred or to be incurred by the customer. To receive such indication, the customer contacts the financial institution or is contacted by the financial institution. In one embodiment, the customer contacts the financial institution by interacting with an online web site or web interface associated with the financial institution. In another embodiment, the financial institution or a third party entity assists the customer in setting up the bill payment management.

In block 104, data associated with the customer is received by the financial institution. The financial institution receives this customer data in order to forecast the amount of bill payments per pay period. As will be later discussed, this data may be used to forecast an aggregate amount of bills to be paid across the contract term and then translate them into a transfer amount per pay period. An additional input that may be used is the financial institution's internal data. The financial institution may also be able to create bill pay segments of customers and have data from business customers to create bill pay databases, which could help forecast individual bills. Additionally, such data is used to determine if the customer is a candidate for the bill payment management program and if so, what equal amount of funds per pay period will be required to be transferred from the source account (e.g. source account) to the bill pay account (e.g., financial institution account). Examples of customer data include previous bill amounts of the customer, average pay or income of the customer, the customer's method for receiving income (e.g., customer's occupation) and the stability thereof, the customer's previous bill paying history, customer behavior, geographical location of the customer, economic factors, credit risk of the customer, market risks involved, bills that the customer wants managed, and any other information which is desired to model the customer and/or forecast bill payments of the customer. One or more of any of such data can be used in any of the blocks of Figure 1. The data may be received manually through manual delivery or via an automated process. For example, the bill history data of the customer may be an automated process where the customer scans in the bills or screen-scapes the bills to the bank. Any other ways to receive customer data and/or to set up the customer account may also be realized and the above-described embodiments shall not limit the present invention.

It should be understood that any bills of the customer may be managed. As used herein, a customer is any individual, company or other entity which has current expenses and/or expects future expenses. A bill is any account, invoice, document, monetary request, debt, or any other request/demand resulting in an expense, credit or liability to the customer on which the customer may be required to or desire to make a payment.

In block 106, the financial institution models the customer using the customer data previously discussed in block 104. The modeling of the customer is for a designated set of bills issued or to be issued for bill periods over the contract term. Additionally, the modeling of the customer may determine a forecasted payment to creditors for the recurring predefined pay period. The predefined pay period for bills is any time interval, including a day, week, month, year, a variable time interval or any other time interval. The time interval is defined by the billing party. As previously mentioned, the recurring pay period may be any predefined time period which payment will be made by the customer from the source account to the bill pay account, such as daily, weekly, bi-weekly, monthly, yearly, upon a 30 day increment, a cash-flow time period, and the like. The recurring pay period is defined by the customer and/or the financial institution. In one embodiment, the recurring pay period is defined by the billing entity or a third party entity, such as an employer issuing a paycheck, and the recurring time period is based on the customer receiving a paycheck.

A forecasted bill payment amount is determined using a computer algorithm or other method and is based on the financial institution's data, rules set by the customer, the customer's data (e.g., customer's bills), and/or other information associated with the customer. For example, the forecasted data can be $5000 per month or other time period based on a mortgage payment, utility bills, car payments, car expenses, dry cleaning bills, and the like. Additional factors the financial institution may take into account when calculating the forecasted bill payment amount includes market and credit risk factors associated with the customer, the bills selected for the financial institution to pay and projected market conditions (e.g., inflation, recession, etc.), a cushion amount to be added to take into account fluctuations greater than the forecasted fluctuations, economic projections/factors (e.g., projected inflation rates, etc.) etc. In one embodiment, for bills which allow a minimum payment, the financial institution gives the customer a choice of how the financial institution should pay the bill. After forecasting the bill payment amount, in one embodiment, a total bill payment amount is calculated by aggregating the forecasted bill payments across the total contract term and adding any risk cushion the bank or customer want to include. The transfer amount is then calculated by dividing this total bill payment amount by the number of pay periods in that the contract term. In this way, the system calculates the forecasted bill payment transfer per pay period for the contract term. Adjustments may be made by the financial institution based upon customer creditworthiness and/or market conditions. In one embodiment, level pay arrangements may be entered with billers/creditors on the customer's behalf (e.g., enter into a fixed rate for electricity and/or other bills for the customer) which would mitigate the bank's and the customer's market risk. It should be noted that the contract term is the time frame for which the bank and the customer agree the bank will pay bills on the customers behalf based upon the customer allowing the bank to transfer a set amount per pay period from their source account to a bill pay account. (day, month, 6 months, year, decade, etc).

In one embodiment, as described in block 108, the average deposit amount per pay period may be based on the average income of the customer. The deposit amount per pay period is the amount of funds deposited per pay period in the source account. The deposit amount may be determined by the bank (e.g., by looking at the history of direct deposits) or by customer (e.g., by providing a net amount after deductions earned per pay period) or by both (e.g., by receiving an annual income from customer and bank assists customer with calculating funds after taxes and payroll deductions). In an embodiment, the deposit amount per pay period is based on the income of the customer, which may be provided by the customer. For example, the customer may indicate having a salary of $120,000 per year. If the pay period is determined to be monthly (i.e. on a period happening every ∼34 days), the customer's income (i.e. take home pay after taxes and other deductions) of $120,000 (e.g., salary, rental income, interest, etc.) is divided by 12 months, resulting in $10,000 per pay period (i.e. month). A predefined portion of this $10,000 per pay period may be determined to be deposited in the source account by the customer. Thus, instead of the customer depositing or spending the complete $10,000 per pay period in any manner desired, at least of portion of this $10,000 take-home-pay would go into the source account. It is noted that the deposit per pay period is after all taxes, payroll deductions and other deductions. In other embodiments, the average income is determined, at least partially, by the system based on deposits to the customer's bank account, such as direct paycheck deposits.

In decision block 110, a determination is made as to whether the forecasted deposit per pay period is greater than the customer's average income (e.g., salary and/or other assets) per pay period. For example, in the above instances, since the forecasted deposit per pay period of $5000 is not greater than the average income of $10,000, the method 100 proceeds to block 116. Otherwise, if the forecasted deposit per pay period exceeds the customer's income, then the customer will not be able to pay the designated bills with the customer's indicated income and thus, the method 100 proceeds to decision block 112.

In decision block 112, a determination is made as to whether the customer wants to adjust variables that will modify the forecasted bill payments per bill period (by the bank) or forecasted deposit per pay period (by the customer). Should the customer still want the financial institution to manage the customer's bill payments, the method 100 advances to block 104 so that the customer can adjust one or more variables that factor into determining the forecasted bill payments per bill period or the forecasted deposit per pay period. For example, the customer may want to eliminate a monthly bill (e.g., weekly dry cleaning or monthly car payments) from the bill payment management or modify a bill (e.g., by refinancing the customer's mortgage) in the bill payment management to reduce the forecasted deposit per pay period. This will also reduce the forecasted bill payments per bill period for the financial institution. Additionally, or alternatively, the customer may want to increase the customer's income by taking another job, receiving increased salary, and the like. In any event, the customer alters the forecasted deposit per pay period to make the forecasted deposit per pay period less than the customer's income per pay period so that the customer's income will cover the forecasted deposit per pay period. In one embodiment, the customer alters variables that will adjust the forecasted bills or payments on the bills to make the forecasted bill payments per pay period less than or equal to the transfer amount per pay period so that the customer's transfer amounts will cover the forecasted bill payments per pay period. In another embodiment, the customer may reduce the risk cushion included in the deposit amount per pay period.

If the customer decides not to make the proper adjustments to change the forecasted deposit per pay period, the method 100 proceeds to block 114 where the method 140 ends. The customer can end the bill payment management service at any point in the method 100. However, if the customer chooses to end the bill payment management arrangement before the end of the payment periods or fails to comply with the terms and conditions, the financial institution can charge interest for any periods when the bill pay account had a negative balance, immediately require payment of negative balances, stop paying bills on the customer's behalf, charge fees or take some other action. Note that, in some embodiments, the bill pay account is funded in advance so that, in some embodiments of the invention, a negative balance in the bill pay account is not allowed or is not possible.

In block 116, an acceptable variance for the bill pay amount is determined at the end of the contract term. Variance is the projected difference at the end of the contract period between the aggregate deposits per pay period over the contract period minus the average bills paid for the contract period plus any acceptable credit/market risk the bank is willing to take for this customer and which the customer is willing to take (e.g is the customer willing to let the account go negative so they have to pay up at the end of the contract period). An acceptable variance means the funds in the bill pay account plus the aggregate of the remaining transfer amounts minus forecasted future bill payments is greater than or equal to the amount the bank and customer are willing to have as a balance in the bill pay account at the end of the contract period; otherwise, the variance may be deemed unacceptable. To determine an acceptable variance, the financial institution uses the customer's data that was previously discussed with regard to block 104. In one embodiment, the acceptable variance threshold amount may be increased or decreased based on one or more risk factors associated with the customer, such as market risks, credit history, geography, etc. For example, if a customer's credit is good, the acceptable variance may be increased, but if the customer has a low credit rating or the customer is unable to qualify for an extension of credit, the acceptable variance may be decreased, possibly to zero. In one embodiment, the acceptable variance can be a percentage of the forecasted bill payment or a predetermined amount from the forecasted bill payment of the pay period. Nonetheless, if the forecasted variance is significant or if the variance is unacceptable, the forecasted bill payments used in calculating acceptable variance may be updated using a new forecast based upon the actual variances experienced versus forecasted. The actual versus forecasted variance is how the actual bill differs from forecasted amount for that bill period.

In block 118, a determination is made as to whether the customer accepts the terms and conditions of the bill payment management service offered by the financial institution. The terms and conditions includes the forecasted bill payment amount, the transfer amount to be transferred from the source account (e.g., source account) per pay period, risk cushions, any legal forms required to be presented to the customer, regular and early termination conditions, customer obligations, the financial institution's obligations, the bill pay forecast by biller (projected amount, date, and in aggregate for the year, etc), and/or any other information pertinent to the bill payment management. If the customer does not accept these terms and conditions, the method 100 proceeds to block 112, which is previously discussed. If the customer does accept these terms and conditions, the method 100 proceeds to block 120.

After receiving an acceptance, in block 120, an initial set up is completed by the financial institution, including setting up a bill payment account, activating automatic recurring transfers or deposits of an equal transfer amount per pay period from the source account to a bill payment account, etc. As previously discussed, the bill payment account may be any account separate from the source account and may be controlled by the financial institution or other entity to transfer money from the bill payment account. The bill pay account may be set up such that only the bank can make withdrawals but a customer can view activity and balances as well as make incremental deposits to the account as they desire. The transfer amount may be a set, equal amount that will be transferred from the source account to the bill pay account on pay day of the each pay period. As previously mentioned, this transfer amount is calculated by projecting the amount of total bills to be paid over the contract period, adding in any incremental cushion associated with risk (market, credit, etc.) and dividing through by the number of pay periods per contract period. The financial institution may round this amount up (e.g. to the next dollar, $5 or $1D) or set the transfer amount at the actual calculation. In one embodiment, the customer can only deposit funds into the bill payment account and thus, cannot make withdrawals therefrom.

In another embodiment, the customer's net pay may be required to be direct deposited into her source account during the set up procedures. For customers whose pay varies throughout a month, the transfer amount may be set to differ each pay period within a month. For example, if a customer earns salary plus commission and is paid salary on 15th & last day of the month, but receives commission on the last day of the month, the amount transferred on the 15th may be less than the amount transferred on the last day of the month. However the amount transferred on the 15th of each month will always be the same amount (e.g. always $2000 on the 15th in the $5000 expense model) and the amount transferred on the last day of the month will always be the same (e.g. $3000 always on the 30/31st in the $5000 expense model). Thus, although transfers are kept consistent per month, customers who have predictable fluctuations in pay within the month may be accommodated. This could be a customer option and she may choose this over a constant amount per pay period.

As previously mentioned, the source account may be any account of the financial institution, another financial institution, or other entity, such as a checking account, demand deposit account (DDA), or any other account. The source account is a source account controlled by the customer where funds are deposited and from which the consistent transfer amount is made to the bill pay account per pay period. The source account, or source account, is used to allow the customer to deposit, transfer and withdraw funds at any time, but the transfer amount will be transferred therefrom each pay period What is left in the source account after the bill pay transfer each pay period is for the customer's discretionary spending. In one embodiment, a portion or all of the funds from the customer's paycheck may be automatically transferred each month into the bill pay account instead of being first deposited into the source account. In one embodiment, a portion or all of the funds from the customer's paycheck may be automatically transferred each month into the bill pay account instead of being first deposited into the source account.

In one embodiment, the initial set up by the financial institution includes receiving authorization to recurrently transfer money (e.g., of the forecasted bill payment amount) out the source account on the customer's behalf to a third party for bill payment every pay period. Other initial set up procedures may be performed by the financial institution, such as inputting in a database the forecasted amount to withdraw from the account, the account number, the pay period, information for all bills to be paid (e.g., the creditor that the bill is associated with, contact information of the entity, payment authorization and ACH information, payment history on the previous bills to the entity, when to pay the bills, which account to pay the bills from, etc.). Additionally, the bank would be authorized to receive the invoices/billing statements for the bills the customer has authorized the bank to pay on her behalf. The bank may also set up "budget billing" if the bank wants to mitigate market risk with utility billers.

In block 122, deposits into the source account and/or bill pay account are received by the financial institution from the customer. In one embodiment, the bill pay account receives deposits from the source account. Additionally, the customer's bills are received. The bill amounts are input into a database and associated with the customer. The exact same amount, or, in some embodiments, a substantially similar amount, is deducted from the customer's checking account on each predetermined date (e.g., payday) and transferred to a financial institution-managed bill pay account. The amount deducted from the bill pay account in order to pay the bill is preset by the rules set up by the bank and the customer during account the initial set up process. Thus, the system must reference the rules for paying each particular bill and pay accordingly on or before the bill due date.

In block 124, the actual variance is determined based on the bill received compared with forecasted bill payment. In one embodiment, the actual variance is calculated using the difference (or other mathematical formula) between the forecasted bill payment amount per pay period minus the actual bill pay amount. For example, given an actual variance for a forecasted bill payment amount per pay period of $5000, an actual bill amount for the current month being $4200 has a variance of S800. If forecast variance meets the programmed definition of significant (determined by the bank and/or customer), then the forecasted future payments will be updated to include learning from this forecast variance. It should be understood that the variance may not be a direct subtraction of the forecasted bill payment amount per pay period minus the actual bill pay amount for the current month and may be calculated in any other manner using other formulas.

In decision block 126, a determination is made as to whether the payment of bills will result in the acceptable variance at the end of the contract term. As previously mentioned, the acceptable variance is determined as an initial set up of the bill payment management system. If the bills, which are received in block 124, result within an acceptable variance at the end of the contract term, the method 100 proceeds to block 136. If the bills result in a variance that is higher than the acceptable variance at the end of the contract term, the method 100 proceeds to block 128.

In block 128, the customer is notified and the financial institution may request a change in the bill pay transfer amount and/or additional payment to the source account (e.g., customer's checking account) or bill pay account. This additionally payment may be required to be paid at the end of the contract term or some other time. Nonetheless, the customer is notified through any means, such as via a SMS message, email message, website notification, letter, or any other communication methods. If the amount paid for the bills results in an unacceptable variance, then the financial institution may pay the bills for current pay period then notify the customer of a need to modify the bill pay arrangement before the bank pays bills due during next pay period or request an additional deposit into bill pay account that will cure the unacceptable variance in the bill pay account. In another embodiment, if the bank is projecting an unacceptable variance, the bank may choose to refuse to pay the bills currently due until the customer works with bank to modify the bill pay arrangement or makes additional deposits that will cure the unacceptable variance in the bill pay account. When the bill payment arrangement is modified, depending upon the terms and conditions, this may re-set the contract period (e.g. customer enters into another 6 month bill pay contract) and/or the transfer amount per pay period.

In decision block 130, a determination is made whether the customer complies with the requests discussed in block 128. In one embodiment, the customer is determined to not be in compliance if the customer does not modify the agreement, transfer funds into the source account (or the bill pay account) or perform other tasks upon request in response to receiving a request to do so. If the customer is determined to be in compliance, the method proceeds to block 136. Otherwise, the method 100 proceeds to block 132.

In block 132, the financial institution executes early termination procedures. The early termination procedures relates to ending all bill payment management by the financial institution for the customer. This process includes charging the customer for any deficiency resulting from the bill payment management or credit the customer for any overpayment to the bill payment account. The amounts due are governed by terms & conditions and can include an early termination fee as well as past interest due on any negative balances, over draft fees on those balances, etc. Any excess fees are charged to the customer and all bills are transferred from the financial institution back to the customer. The bill pay account is then closed. After early termination procedures are completed, the method 100 ends at block 134.

In block 136, a determination is made as to whether the bill payment management terms and conditions (discussed previously with respect to block 118) are met by the customer. The determination is made by the financial institution and the customer. If one or more terms and conditions are not met, the method 100 is routed to block 138 where the customer is notified to comply with such terms or early termination procedures (block 132) are executed and the method 100 ends 134. In this scenario, the bank may choose to pay the bills due the current pay period and notify the customer of need to correct prior to making the next pay period's bills or to choose not to pay any further bills until the terms and conditions of the agreement are met. However, if the customer does comply, block 136 is repeated to determine if the customer is in compliance with all terms and conditions. If so, the method 100 continues to block 140.

In block 140, the bills for the bill period received during the current pay period are paid by the financial institution from an account, such as the bill pay account, source account, an overdraft account, credit account, or any other account. The bills can be paid by automated clearinghouse (ACH), auto debit, check or interchange earning networks, directly by the financial institution, via a bill pay vendor or via any other manner. In the event that the amount paid for the bills is higher than the balance in the bill pay account, the financial institution overdrafts the bill pay account. The financial institution may decide to not charge overdraft or over limit fees. Overdrafting of the bill pay account does not necessarily mean that the customer has to replenish the account. Instead, the financial institution waits until the end of the final pay period (or the contract term or other predefined time period) to settle any deficiency of the account or any remaining funds in the bill pay account. One exception to waiting to the end of the final pay period to settle up with the customer, as previously discussed, is when the amount paid for bills is so much higher than the forecasted amount that this differential amount becomes greater than the acceptable variance. In that case, additional funds are requested to be deposited, or the bill management contract is modified, as previously described with respect to block 128.

In another embodiment, the decision to pay a bill under the bill payment management service is based upon whether or not the customer is projected to end the payment period term with a negative aggregate balance. If so, the decision of the financial institution to pay the bills will be based upon the lower of the financial institution's tolerance for credit/liability risk with the customer and what amount will the customer permit the negative ending balance to end up at. It should be noted that the decision to pay bills is based upon projected plan balance at the end of the contract term, not the balance in the bill pay account. In one embodiment, the bank is required to make bill payment on or before due date of all bills. If the bank fails to do so, the terms and conditions will outline how the bank will rectify and compensate the customer. This allows a customer benefit of timely bill payment so that the customer does not have to worry about it.

In the event that the amount paid for the bills is less than the forecasted amount, the financial institution does nothing (except when the difference is greater than the acceptable variance as previously discussed in block 128) and the difference between the amount paid for bills and the forecasted amount remains in the bill pay account (or the customer's checking account). In one embodiment, the financial institution may refund the customer any monetary amount paid for the bills less than the forecasted amount. This may be done at the end of each pay period, at the end of the contract or at a predetermined time. The rules governing when a surplus remains in the bill pay account would be set up during the initial account set up and the bank would then access those rules when determining what bills to pay. When this arrangement is in place and implemented, the customer would not be considered in an "unacceptable" variance position, but the bank would notify customer of which bills they did not pay and the due date for those bills.

When each bill is received, the financial institution automatically pays the actual bill amounts as previously agreed with the customer from the bill pay account (or customer's checking account) as the bills come due on a timely basis. This occurs regardless if enough funds are in the bill pay account (or customer's checking account) and without having to request authorization at the time of the transfer. The only payment the customer makes is an equal transfer amount to the bill pay account for each pay period (e.g., per month) on the same day in the pay period. Thus, the customer fully knows exactly how much the customer will be paying each pay period and exactly when the customer will be making such payment. For example, if the forecasted bill payment amount is $1000 per a 30-day pay period for one year, $1000 per month on the first day of the month, for example, will be transferred (e.g., via automatic withdraw, manual deposits, etc.) from the customer's checking account to the financial institution's bill pay account to pay the bills occurring in that month. This occurs for each 30-day period of an exemplary 12 month contract term and is true for all bills that the financial institution and the customer have agreed for the financial institution to pay. If the payments of the bills for the current month are over the $1000 per month or under the $1000 per month, these variances are settled at the end of the 12 month contract term. In one embodiment, the $1000 per month is transferred directly from the source account to the creditors by the financial institution and any underpayment of bills by the bill pay account is covered by the financial institution until the end of the contract term. As previously stated, the financial institution can pay a plurality of bills for the customer regardless of the nature of the bill so that all expenses of the customer are paid by the financial institution per pay period (or bill period) and so that the customer only pays equal payments once per pay period for the entire bill payment contract term.

In one embodiment, the customer or the financial institution prioritizes the payments of the customer's bills. For example, it may be preset that the electricity bill is to be paid first, the water bill second, the mortgage bill third, and so forth. This may be an option that is activated in response to not enough money being in the bill pay account and/or the source account or in response to the customer providing an indication to the financial institution which bills should be paid and which bills should not be paid under other conditions, under any condition, and/or for the whole contract term, In an embodiment, the priorities established by either the customer or the financial institution are the basic necessities, such as electricity (for AC and/or heat), gas (for heat), water, possibly the mortgage, and/or other necessities defined by the customer or financial institution. For example, if the bill pay account only had a $100 balance and the bill amounts for electricity, water, and cable are $50, $40 and $40, respectively, then the method 100 would only pay the electricity and water bill at $90 and not pay the cable bill since the total bills (i.e, $130) for the customer are more than the amount in the bill pay account (i.e. $100) and the first two prioritized bills (electricity and water bill = $90) being less than the amount in the bill pay account.

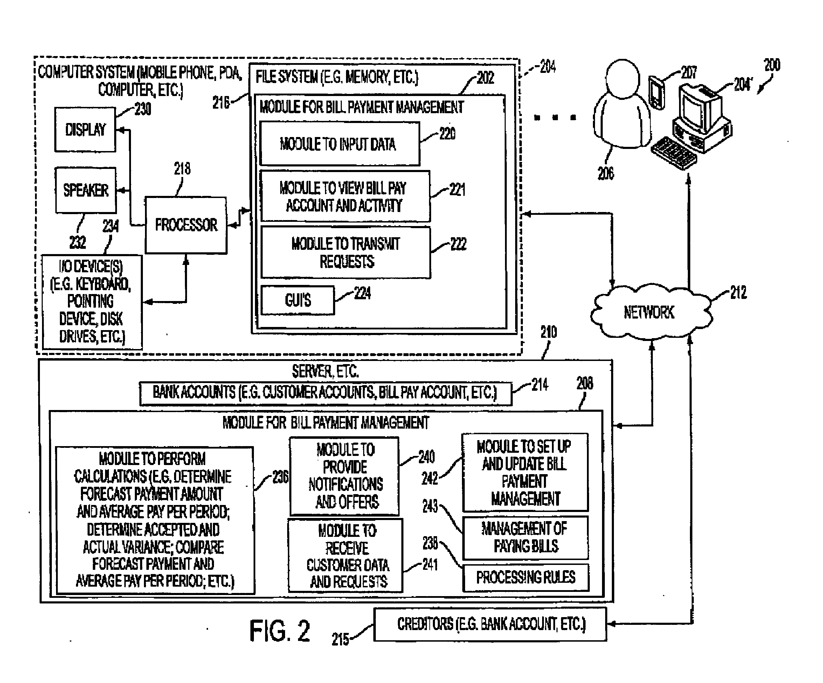

In one embodiment, any bill payment information and/or account information is saved, uploaded or transferred to a web site or intranet of the lender or a third party service provider via an interface. Customers can view activity within the bill pay account at any time, including how they are projected to perform versus the forecasted plan. It should be understood that the methods and systems of the bill payment management method 100 can be implemented via a web-based interactive system connects to a computer system and server as will be described later with reference to Figure 2.

Customers can also update their forecasted payments when their bills change, such as when switching wireless providers, switching jobs, if a significant surplus or deficit is projected at the end of the plan, and the like. This may reset the pay period where the customer may need to re-sign for another contract term or extend the current contract term. The customer may need to agree to maintain certain elements of their relationship with the financial institution during this period. Fees may be charged for updating the bill payment management plan while in the payment periods.

In decision block 142, a determination is made whether the current pay period is the final pay period according to the agreement between the customer and the financial institution. This final pay period indicates that the bill payment management is coming to an end and various decisions on how to proceed thereafter need to be made. If it is determined that the current pay period is not the final pay period, the method 100 returns to block 122. Conversely, if the current pay period is the final pay period, the method 100 proceeds to block 144.

In decision block 144, in one embodiment, a determination is made whether the customer wants to continue and/or renew the bill payment management. The customer is notified that the customer is in the final pay period. If the customer does not want to renew, the customer sends a request to end the bill payment management service and the method 100 proceeds to block 146. In one embodiment, if the customer does not provide an indication of whether the customer wants to renew after a predetermined time period, the method 100 may be set up to automatically proceed to block 146 (or block 148) as agreed to in the bill payment contract. If the customer does want to renew, the customer provides such indication to the financial institution to continue the bill payment management service and the method 100 proceeds to block 148. In one embodiment, similar to the above-described embodiment, if the customer does not provide an indication of whether the customer wants to renew after a predetermined time period, the method 100 may be set up to automatically proceed to block 148.

It should be understood that decision block 144 is optional and the method 100 may be designed so as not to require a specific enrollment time period or a renewal process. This may be based upon the various parameters of the customer, such as risk, credit-worthiness and past credit history, and the like. Other parameters may involve the fee structure of the bill payment management system, the type of bill payment, the duration of the contract with the customer (e.g. long term contract vs. a short term contract), and the like. All of these parameters determine the fee charged to the customer for the bill payment management system, the time period the bill payment management system is in effect, whether there is a specific enrollment time period and whether the customer is required to renew the bill payment management system, and other factors.

In block 146, the termination procedures according to the terms and conditions of the agreement between the customer and the financial institution are executed and a payment or refund of any total combined variance over all of the pay periods is determined. For example, if the financial institution paid $100 over the forecasted amount for the first 6 months of the bill payment management term and $80 under the forecasted amount the last 6 months of the bill payment management term, the total combined variance is $120 (=$100* 6 months - $80* 6 months) in excess of the forecasted bill payment amount for the total term (12 months). As such, the $120 would be charged to the customer, where the customer may pay instantly or the $120 could be transferred to a new or existing checking account. Any excess funds are returned to the customer.

In block 148, a determination is made as to whether the customer wants to roll the variance into the next bill pay period. Since the customer wants to continue the bill payment management service, the bill payment history is compared with the forecasted amount to determine how great the variance was, if the amount paid was consistently higher than the forecasted amount, and other like analyses. If the customer decides to roll the variance or other such information back into the next bill pay period, the method 100 proceeds back to block 104. As such, the variance is inputted back into the customer's data of block 104 and is used in block 106 along with updated credit and market conditions in modeling the customer to determine a new forecasted bill payment amount. For example, if the forecasted amount for one year is $1200 (or $100 per month) and the actual paid bill amount was $1320 (or $120 per month), the forecasting model of block 106 recalculates a forecasted amount for the next series of pay periods, and thus, may determine that the forecasted amount for the next year is $1320 or more to reduce risk and make sure that the financial institution is not constantly overdrafting the bill pay account. The customer will be notified of the new forecasted payment amount.

If the customer does not agree to roll the variance back into the next bill pay period, the method 100 proceeds to block 146, which, as previously discussed, terminates the bill payment management service and arranges for payment or refund of any variance. In one embodiment, even if the customer indicates she does not want to roll the variance back into the next bill pay period, the method 100 may return to block 104 and proceed as previously described.

It should be noted that the accounts discussed above, from which bills are paid, are checking or savings accounts having money therein. However, embodiments of the present invention are also directed to, instead of using checking/savings accounts, allowing the financial institution to pay the bills from a credit account, such as a credit card, line of credit, loan, or any other account where the financial institution fronts the money for the bills. As such, each bill payment will be a credit incurred by the customer with decreasing availability and the ending credit amount to be settled at a predetermined time. Other embodiments of the present invention are directed to using a liability risk management (LRM) model behind a deposit account that is not tied to paying for specific purchase, but rather is tied to paying any bill based upon the projected funding for the period plus an accepted variance.

In one embodiment, the customer may be offered retention incentives and acquisition offers to incentivize the customer to try or stay on the bill payment management method 100 and system described herein. For example, the financial institution could offer $100 to the customer in advertising if the customer switches his natural gas bill or electricity bill to the financial institution's bill payment management service. If a customer uses bill payment management service, the customer is charged a periodic or one-time fee. However, this periodic fee could be waived in an effort to attract new customers.

Figure 2 is a block schematic diagram of an example of a system 200 for bill payment management in accordance with an embodiment of the present invention. The system 200 includes a bill payment management module 202 operable on a computer system 204, or similar device of a user 206 or client. Alternatively, or in addition to the bill payment management module 202 on the user's computer system 204 or client, the system 200 includes a server bill payment management module 208 operable on a server 210 and accessible by the user 206 or client 204 via a network 212. The method 100 is embodied in or performed by the bill payment management module 202 and/or the server bill payment management module 210. For example, the method 100 is performed by the bill payment management module 202. In another embodiment of the invention, the method 100 is performed by the server bill payment management module 208. In a further embodiment of the present invention, some of the features or functions of the method 100 are performed by the bill payment management module 202 on the user's computer system and other features or functions of the method 100 are performed on the server bill payment management module 208.

Bank accounts 214 are operable on and/or communicative with the server 210 and are accessible by a plurality of users 206 using an Internet browser on their respective computer systems 204, PDA 207 or other clients. The bank accounts 214 include checking accounts of customers, other checking accounts, bill pay accounts, credit accounts, LRM models, and other types of accounts. The network 212 is the Internet, a private network wireless network, or other network. Each computer system 204' is similar to the exemplary computer system 204 and associated components illustrated in Figure 2.

The bill payment management module 202 and/or 208 is a self contained system with embedded logic, decision making, state based operations and other functions that operates in communication with the bank accounts 214 and/or creditors 215 (e.g., creditors bank accounts, etc.). The self contained system allows financial institutions, individuals, services, and the like to interact.

The bill payment management module 202 is stored on a file system 216 or memory of the computer system 214. The bill payment management module 202 is accessed from the file system 216 and run on a processor 218 associated with the computer system 214.

The bill payment management module 202 includes a module for inputting data 220. The inputting data module 220 allows the customer, financial institution representative or other user 206 to input various data into the computer system 204, such as previous bill amounts of the customer, average pay or income of the customer, the customer's method for receiving income (e.g., customer's occupation) and the stability thereof, the customer's previous bill paying history, customer behavior, geographical location of the customer, economic factors, credit risk of the customer, market risks involved, bills that the customer want managed, and any other information which is desired to model the customer and/or forecast bill payments of the custorner. The inputting data module 220 is accessed or activated whenever the customer, financial institution representative or other user 206 desires to input information and calls other modules such as a module to transmit requests 222 or GUIs 224 as described below.

The bill payment management module 202 also includes a module to view bill pay account and activity 221. This bill viewing module 221 allows for the user 206 to logon to an online interface managed by the financial institution, which retrieves bill pay account information associated with the customer. The bill pay account information includes the amount of money in the account, history of activity, forecasted payments and projected variance for each pay period and for the ending term.

The bill payment management module 202 further includes module to transmit requests 222. The requests relate to requests for one or more actions predefined by the customer that the customer desires, such as updating forecasted payment amounts, requesting to end the bill payment management, requesting to renew the bill payment management at the end of the payment term, and other requests. The module to transmit requests 222 also transmits any information from the user's computer 204 to the server, such as logon information, customer data, and other information.

The user computer system 204 also includes a display 230 and a speaker 232 or speaker system. The display presents the any information on the screen to the user 206. Any GUIs 224 associated with the bill payment management is also presented on the display 230. The speaker 232 presents any voice or other auditory signals or information to the user 206.

The user computer system 204 also includes one or more input devices, output devices or combination input and output device, collectively I/O devices 234. The I/O devices 234 include a keyboard, computer pointing device or similar means to enter information into various GUIs as described herein. The I/O devices 234 also include disk drives or devices for reading computer media including computer-readable or computer-operable instructions.

The server bill payment management module 208 presents one or more predetermined GUIs 224 to permit the input and management of the bill payment management system 200 and method 100. These GUIs are predetermined and presented in response to the user indicating the user would like to enter information and/or settings. The predetermined GUIs are generated by the server bill payment management module 208 and are presented on the display 230 of the computer system 204. The GUIs 224 also include GUIs to permit the financial institution representative or owner to manage the bill payment management actions and services.

The server bill payment management module 208 also includes a module to perform calculations 236. The module to perform calculations 236 perform various tasks with respect to performing any decisions or determinations and calculations, including determining the forecasted payment amount, determining average pay per period, comparing the forecasted payment amount with average pay per period to determine if the forecasted payment amount is greater than the average pay per period, determine the accepted and actual variance, and the like. The values of these calculations are transferred to other modules in the server bill payment management module 208.

The server bill payment management module 208 also includes processing rules 238. The processing rules 238 are those defined by the customer and financial institution in establishing the bill payment management, as previously discussed in block 106 of Figure 1. The processing rules 238 may be stored locally on the user's computer 204 or the user's computer readable storage medium 216. The processing rules 238 may also be stored remotely on the network 210 in a database (not shown).

The server bill payment management module 208 further includes a notifications feature 240. The notifications feature 240 includes any notification that the financial institution may issue to the customer, any notification as predefined by the customer, any notification in response to user input being required by the customer, any error notification, or other alert or notification. The notification feature 240 notifies the customer 206 by any mechanism, including any audible means, visible means, or by any other means capable of being perceived by the senses of the user 206.

The server bill payment management module 208 also includes a module to receive customer data and requests 241. The module to receive customer data and requests 241 perform various tasks with respect to receiving data from the computer 204. For example, the module to receive customer data and requests 241 receives input data from the module to input data 220 and requests and other transmissions from the module to transmit requests 222. Any received information is then distributed to other modules in the server bill payment management module 208.

The server bill payment management module 208 also includes a module to set up and update bill payment management 242 ("set up/update module"). The set up/update module 242 receives various information from the module to receive customer data and requests 241 and initializes the bill payment management, as previously discussed in block 120. Further, the set up/update module 242 receives requests and update information from the module to receive customer data and requests 241 so as to update the bill payment module after it has been initialized.

The server bill payment management module 208 yet further includes a management of paying bills 243. The management of paying bills 243 is responsible for receiving bill information and determining the bills to be paid as well as paying the bills. The management of paying bills 243 also reports the value of the amount of bills to the module to perform calculations 236 to determine the variance.

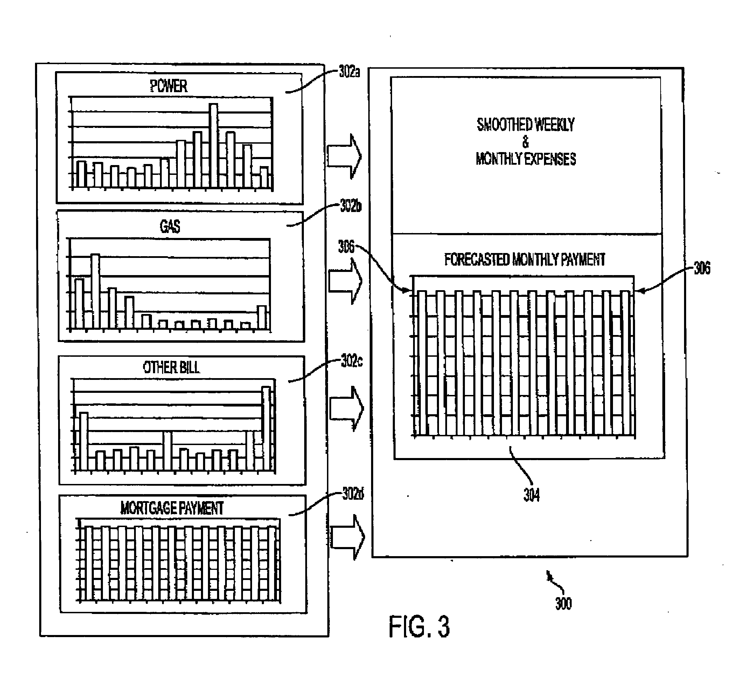

Figure 3 illustrates bar charts 300 showing the leveling of bill payments using bill payment management according to one embodiment of the present invention. Bar charts 302a-d illustrate the monthly payments of a customer over a 12 month period, prior to the customer employing the bill payment management as described herein. As previously stated, the pay period does not have to be monthly and instead, may be daily, weekly, yearly, upon a 30 day increment, a cash-flow time period, or any other period. Bar chart 302a illustrates the customer's power or electricity bill over 12 consecutive months, bar chart 302b illustrates the customer's gas bill over 12 consecutive months, bar chart 302c illustrates another bill of the customer over 12 consecutive months, and bar chart 302d the customer's mortgage payment over 12 consecutive months. Each of these charts thus illustrates separate bills of the customer and each chart shows a series of months on the x-axis and the amount of payments for that month on the y-axis. Although Figure 3 only illustrates four bills of the customer, it should be understood that any number of bills (e.g., >0) may be included. Bar charts 302a-c illustrate bills having variable amounts due per month of the customer while bar chart 302d illustrates a bill having a fixed amount due per month. Using the bill payment management method 100 and system 200, as previously described, Figure 3 illustrates the bills in bar charts 302a-d are taken into account and a forecasted monthly payment per month having equal payments results, as illustrated in bar chart 304. Thus, by using the bill payment management method 100 and system 200, the customer is only charged a fixed monthly payment 306 instead of the total variable payments of multiple bills that were required before the customer uses the bill payment management method 100 and system 200.

While certain exemplary embodiments have been described and shown in the accompanying drawings, it is to be understood that such embodiments are merely illustrative of and not restrictive on the broad invention, and that this invention not be limited to the specific constructions and arrangements shown and described, since various other changes, combinations, omissions, modifications and substitutions, in addition to those set forth in the above paragraphs, are possible. Those skilled in the art will appreciate that various adaptations and modifications of the just described embodiments can be configured without departing from the scope and spirit of the invention. Therefore, it is to be understood that, within the scope of the appended claims, the invention may be practiced other than as specifically described herein.

## Claims

1. A method for bill payment management, comprising: determining a series of substantially equal payment amounts to charge a customer via a computer system based on a plurality of recurring bills of the customer; periodically charging the customer the substantially equal payment amount; and paying at least one of the recurring bills from an account on behalf of the customer.

2. The method of claim 1, wherein paying at least one of the recurring bills comprises automatically paying the at least one of the recurring bills each pay period by an entity other than the customer and/or wherein the recurring bills are billed from at least one creditor and the payment amounts are charged to the customer from an entity different from the at least one creditor.

3. The method of claim 1 or claim 2, wherein the determining a series of substantially equal payment amounts comprises: determining a bill payment term comprising a number of periods; estimating a total amount which is to be charged to the customer for the bill payment term; and calculating the substantially equal payment amounts by dividing the estimated total billed amount by the number of periods.

4. The method of any of the preceding claims, wherein the account comprises an account owned by the customer, optionally further comprising receiving authorization from the customer to automatically and periodically withdrawal funds from the account on behalf of the customer or wherein the account comprises an account owned by an entity other than the customer, optionally wherein the periodically charging the customer the substantially equal payment amount comprises transferring funds from an account owned by the customer to the account owned by the entity other than the customer.

5. The method of claim 1, wherein the periodically charging the customer the substantially equal payment amount comprises withdrawing funds from a first financial account; and wherein the paying at least one of the recurring bills from an account on behalf of the customer comprises paying the at least one of the recurring bills from a second financial account, the second financial account being different from the first financial account.

6. The method of claim 1, wherein a bank performs each of: the determining a series of substantially equal payment amounts to charge a customer via a computer system based on a plurality of recurring bills of the customer; the periodically charging the customer the substantially equal payment amount; and the paying at least one of the recurring bills from an account on behalf of the customer.

7. The method of claim 1, wherein the paying the at least one of the recurring bills comprises automatically transferring funds from the account to the at least one creditor and/or wherein the determining a series of substantially equal payment amounts occurs prior to charging the customer any of the payment amounts.

8. The method of claim 1, wherein the customer is charged the payment amount every period for a predefined number of periods, optionally wherein the period comprises one of a month, a day, a week, two weeks, cash flow pay period, and a year and/or wherein the paying the at least one of the recurring bills from an account on behalf of the customer comprises automatically paying the recurring bills when each of the recurring bills comes due.

9. A method for bill payment management, comprising: periodically charging payment amounts to a customer via a computer system based on a plurality of bills of the customer; and paying at least one of the plurality of bills from an account on behalf of the customer by an entity other than the customer, optionally wherein the payment amounts comprise equal payment amounts periodically charged to the customer.

10. The method of claim 9, wherein the at least one of the plurality of bills comprises the at least one recurring bill, the method optionally further comprising receiving a selection from the customer of the recurring bills that are to be paid on behalf of the customer, and/or wherein the at least one of the plurality of bills comprises variable amounts that are billed to the customer every period.

11. The method of claim 9, further comprising depositing the periodic payment amounts charged to the customer into the account and/or the method further comprising: estimating a total amount which is to be charged to the customer for the bill payment term; and calculating the payment amounts by dividing the estimated total billed amount by the number of periods.

12. A method implemented by a computer system for bill payment management, the method comprising: determining via the computer system a plurality of periodic payments for the customer based upon a bills of a customer; and paying via the computer system at least one of the bills from an account on behalf of the customer.

13. The method of claim 12, further comprising periodically charging the periodic payments to the customer, the amount of each of the periodic payments charged to the customer being equal for each period, optionally wherein the periodically charging the customer the period payments comprises withdrawing funds from a first financial account; and wherein the paying at least one of the bills from an account on behalf of the customer comprises paying the at least one of the bills from a second financial account, the second financial account being different from the first financial account.

14. The method of claim 12, wherein a bank performs each of: the determining a series of substantially equal payment amounts to charge a customer via a computer system based on a plurality of the bills of the customer; and the paying at least one of the bills from an account on behalf of the customer.

15. An apparatus for bill payment management comprising: a processor; a module operable on the processor, the module configured to: determine a periodic payment amount for a customer based on at least one recurring bill of the customer; periodically charge the customer the payment amount; and pay the at least one recurring bill from an account on behalf of the customer.

16. The apparatus of claim 15, wherein the determining the periodic payment amount comprises determining an equal payment amount to charge the customer every period and wherein the paying the at least one recurring bill comprises paying the at least one recurring bill when payment of the at least one recurring bill is due and/or wherein the module is further configured to: estimate a total amount which is to be charged to the customer for the bill payment term; and calculate the payment amounts by dividing the estimated total billed amount by the number of periods.

17. The apparatus of claim 15, wherein the paying the at least one recurring bill from an account on behalf of the customer comprises automatically paying the recurring bills when each of the recurring bills comes due, and/or wherein the periodically charging the customer the payment amount comprises withdrawing funds from a first financial account; and wherein the paying the at least one recurring bill from an account on behalf of the customer comprises paying the at least one recurring bill from a second financial account, the second financial account being different from the first financial account.

18. The apparatus of claim 1515, wherein the module is operable to allow a bank to perform: the determining a periodic payment amount for a customer based on at least one recurring bill of the customer; the periodically charging the customer the payment amount; and the paying the at least one recurring bill from an account on behalf of the customer.

19. A computer program product for bill payment management, the computer program product including a computer-readable medium having a computer program residing thereon, the computer program comprising: instructions for determining a periodic payment amount for a customer based on at least one recurring bill of the customer; instructions for periodically charging the customer the payment amount; and instructions for paying the at least one recurring bill from an account on behalf of the customer.

20. The computer program product of claim 19, wherein the computer program further comprises: instructions for estimating a total amount which is to be charged to the customer for the bill payment term; and instructions for calculating the payment amounts by dividing the estimated total billed amount by the number of periods, and/or wherein the instructions for paying the at least one recurring bill comprises instructions for automatically paying the recurring bills when each of the recurring bills comes due and/or wherein the instructions for periodically charging the customer the payment amount comprises instructions for withdrawing funds from a first financial account; and wherein the instructions for paying at least one of the recurring bills from an account on behalf of the customer comprises instructions for paying the at least one of the recurring bills from a second financial account, the second financial account being different from the first financial account.
